# EUROPEAN PATENT APPLICATION

(11) **EP 4 749 703 A1**
(43) Date of publication of application: **27.05.2026**
(21) Application number: 25216032.0
(22) Date of filing: 14.11.2025
(51) Int. Cl.: H01M 4/13, H01M 10/058

(54) **ELECTRODE ASSEMBLY AND SECONDARY BATTERY INCLUDING THE SAME**

(30) Priority: 22.11.2024 KR 20240168238
(71) Applicant: SAMSUNG SDI CO., LTD., Yongin-si, Gyeonggi-do 17084 (KR)
(72) Inventor: KIM, Hyunchul, 17084 Yongin-Si (KR)
(74) Representative: Maiwald GmbH

(57) **Abstract**

An electrode assembly, including a first electrode including a first substrate, a first mixture portion including an active material and coated on one surface of the first substrate, a first uncoated portion on the one surface of the first substrate, the first uncoated portion of the first substrate being exposed, and a first insulating layer on the first uncoated portion, a second electrode including a second substrate, a second mixture portion including an active material and coated on one surface of the second substrate, a second uncoated portion on the one surface of the second substrate, the second uncoated portion of the second substrate being exposed, and a second insulating layer on the second uncoated portion, and a separator between the first electrode and the second electrode.

## Description

### BACKGROUND

### 1. Field

The present disclosure relates to an electrode assembly and a secondary battery including the electrode assembly.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

An aspect includes an electrode assembly, including a first electrode including a first substrate, a first mixture portion including an active material and coated on one surface of the first substrate, a first uncoated portion on the one surface of the first substrate, the first uncoated portion of the first substrate being exposed, and a first insulating layer on the first uncoated portion, a second electrode including a second substrate, a second mixture portion including an active material and coated on one surface of the second substrate, a second uncoated portion on the one surface of the second substrate, the second uncoated portion of the second substrate being exposed, and a second insulating layer on the second uncoated portion, and a separator between the first electrode and the second electrode.

An end of the first mixture portion may protrude beyond an end of the second mixture portion.

The first insulating layer may be coated on the one surface of the first substrate, the first insulating layer having a thickness in a range of 95 % to 105 % of a thickness of the first mixture portion.

An end of the separator may protrude beyond an end of the first insulating layer.

One end of the first insulating layer may contact one end of the first mixture portion.

A width of the first insulating layer may be in a range of 10 % to 75 % of a width of the first uncoated portion.

The first insulating layer and the first mixture portion may be spaced apart from each other by a predetermined separation distance.

A sum of the predetermined separation distance and a width of the first insulating layer may be equal to or less than 75 % of a width of the first uncoated portion.

The first insulating layer may cover a part of the first mixture portion.

A width, in a first direction, of a region where the first insulating layer covers a part of the first mixture portion may be identical to a width between a portion where the first mixture portion is most protruded in a reverse direction of the first direction and a portion where the second mixture portion is most protruded in the reverse direction of the first direction.

The separator and the second electrode may be on an upper portion of a region where the first insulating layer covers the first mixture portion.

An aspect includes a secondary battery, including an electrode assembly including unit cells that are stacked, each of the unit cells including a first electrode, a separator, and a second electrode, a case that houses the electrode assembly, and an electrolyte in the case, wherein the first electrode includes a first substrate, a first mixture portion including an active material and coated on one surface of the first substrate, a first uncoated portion on the one surface of the first substrate, the first uncoated portion of the first substrate being exposed, and a first insulating layer disposed on the first uncoated portion, wherein the second electrode includes a second substrate, a second mixture portion including an active material and coated on one surface of the second substrate, a second uncoated portion on the one surface of the second substrate, the second uncoated portion of the second substrate being exposed, and a second insulating layer disposed on the second uncoated portion, and wherein the separator is between the first electrode and the second electrode.

An end of the first mixture portion may protrude beyond an end of the second mixture portion.

The first insulating layer may be coated on the one surface of the first substrate, the first insulating layer having a thickness in a range of 95 % to 105 % of a thickness of the first mixture portion.

An end of the separator may protrude beyond an end of the first insulating layer.

One end of the first insulating layer may contact one end of the first mixture portion.

A width of the first insulating layer may be in a range of 10 % to 75 % of a width of the first uncoated portion.

The first insulating layer and the first mixture portion may be spaced apart from each other by a predetermined separation distance.

The first insulating layer may cover a part of the first mixture portion.

A difference between a thickness of an edge portion of the first electrode and a thickness of a central portion of the first electrode may be equal to or less than a predetermined threshold difference.

These and other aspects and features of the present disclosure will be described in or will be apparent from the following description of embodiments of the present disclosure.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a schematic view of a secondary battery according to an embodiment of the present disclosure;
FIG. 2 is a cross-sectional view of a secondary battery according to an embodiment of the present disclosure;
FIG. 3 illustrates an example of a first electrode according to an embodiment of the present disclosure;
FIG. 4A illustrates another example of the first electrode according to an embodiment of the present disclosure;
FIG. 4B illustrates yet another example of the first electrode according to an embodiment of the present disclosure;
FIG. 5A illustrates a further example of the first electrode according to an embodiment of the present disclosure;
FIG. 5B illustrates still another example of the first electrode according to an embodiment of the present disclosure;
FIG. 6A illustrates an additional example of the first electrode according to an embodiment of the present disclosure;
FIG. 6B illustrates an example of an electrode assembly according to an embodiment of the present disclosure; and
FIG. 7 is a view comparing differences in the presence or absence of an edge-side sliding region of the electrode in the prior art and in the electrode of an embodiment of the present disclosure.

### DETAILED DESCRIPTION

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated.

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

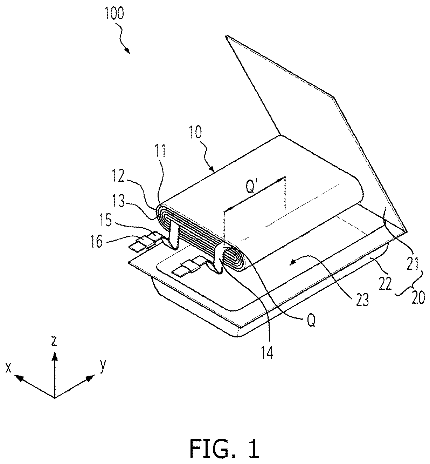

FIG. 1 is a schematic view illustrating a secondary battery according to an embodiment of the present disclosure.

Referring to FIG. 1, a secondary battery 100 may include an electrode assembly 10 and a case 20 that accommodates the electrode assembly 10. At a lower left of FIG. 1, a first direction (Y direction) that is an imaginary direction for ease of understanding, a second direction (Z direction) that intersects the first direction, and a third direction (X direction) that intersects each of the first direction (Y direction) and the second direction (Z direction) are illustrated. In addition, according to FIG. 1, a line Q', which crosses the secondary battery 100 by a predetermined distance in the first direction (Y direction) from a portion Q of a first electrode tab 14 of the case 20 connected with the first electrode tab 14 of the secondary battery 100 that is not bent, is illustrated. The line Q', which crosses by the predetermined distance in the first direction (Y direction) from the portion of the first electrode tab 14 of FIG. 1 that is not bent, may be a line virtually defined on the drawing for ease of understanding, and the portion Q where the first electrode tab 14 is not bent may also be a portion virtually defined on the drawing for ease of understanding according to an embodiment.

Referring to FIG. 1, the electrode assembly 10 may include a first electrode 11, a separator 12, and a second electrode 13. The separator 12 may be interposed between the first electrode 11 and the second electrode 13. The electrode assembly 10 may be configured by winding or stacking unit cells, each including the first electrode 11, the second electrode 13, and the separator 12. A first electrode tab 14 and a second electrode tab 15, which extend from one side of each respective electrode of the electrode assembly 10, may be provided so that a protective tape 16 is adhered to a surface of each of the electrode tabs and the electrode tabs partially protrude to an outside of a case 20 (pouch-type case). Referring to FIG. 1, although the electrode assembly 10 is illustrated as being of a wound type, the shape may, for example, be of a stack type or another shape.

Referring to FIG. 1, the first electrode tab 14 and the second electrode tab 15 may extend in the same direction from the first electrode 11 and the second electrode 13, respectively, so that the first electrode tab 14 and the second electrode tab 15 are formed on the same one side of the electrode assembly. In addition, as illustrated, the first electrode tab 14 and the second electrode tab 15 may be bent in a space between one side surface of the case 20 and the electrode assembly 10 so as to be accommodated in the case. However, for example, the first electrode tab 14 of the first electrode 11 may be formed on one side of the electrode assembly 10, and the second electrode tab 15 of the second electrode 13 may be formed on the other side of the electrode assembly.

As illustrated, the first electrode tab 14 may be located on a left-side end surface of the electrode assembly, and the second electrode tab 15 may be located on a right-side end surface of the electrode assembly or may be located on the same one face oriented in the same direction. Here, the left side and the right side are indicated for convenience of description on the basis of the secondary battery 100 shown in FIG. 1, and the positions thereof may vary when the secondary battery is rotated left-right or up-down.

Referring to FIG. 1, the case 20 may accommodate the electrode assembly 10 and an electrolyte, thereby forming an external shape of the secondary battery. As illustrated, the case 20 may be a case of a pouch-type secondary battery. The case 20, which is pouch-type, may include a lower case 22 that accommodates the electrode assembly 10, an upper case 21 that seals an upper surface of the electrode assembly 10, and a recessed space 23 that can accommodate the electrode assembly 10, the recessed space 23 being formed by press-forming a pouch outer material. However, the type of secondary battery, for example, the case may be a case of a prismatic secondary battery, a cylindrical secondary battery, or a button-type secondary battery. The case may be formed of at least one of a metal such as stainless steel (SUS), aluminum, an aluminum alloy, or nickel-plated steel, a laminate film forming a pouch, or plastic.

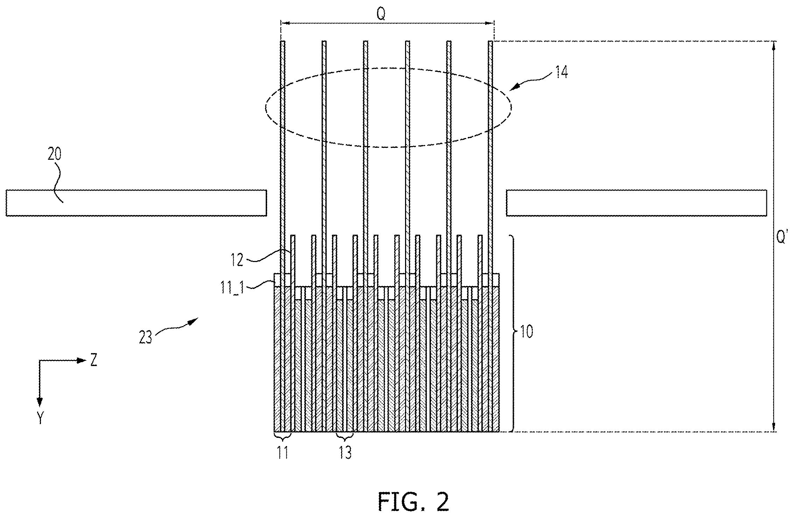

FIG. 2 is a cross-sectional view of the secondary battery 100 of FIG. 1 according to an embodiment of the present disclosure.

Referring to FIG. 2, an exemplary structure obtained by cutting the secondary battery along the line Q', which crosses the secondary battery by the predetermined distance in the first direction (Y direction) from the portion Q of the case 20 connected with the first electrode tab 14 where the first electrode tab 14 is not bent in the secondary battery 100, can be observed. The line Q', which crosses by the predetermined distance in the first direction (Y direction) from the portion of the first electrode tab 14 that is not bent in FIG. 2, may be a line virtually defined on the drawing for ease of understanding, and the portion Q where the first electrode tab 14 is not bent may be a portion virtually defined on the drawing for ease of understanding according to an embodiment. At a lower left of FIG. 2, the first direction (Y direction) and a second direction (Z direction) intersecting the first direction, which are imaginary directions for ease of understanding, are shown. Therefore, the line Q' and the portion Q correspond to those of FIG. 1.

The first electrode 11 may include a first substrate, a first mixture portion coated with an active material on one surface of the first substrate, a first uncoated portion disposed on the one surface of the first substrate where the first substrate is exposed, and a first insulating layer 11_1 disposed on the first uncoated portion. A first electrode tab 14 (e.g., the electrode tabs will be one tab after being coupled together) may extend outward from the first uncoated portion where the first substrate is exposed from among the first substrate, and the first electrode tab 14 may be electrically connected to the case 20.

The second electrode 13 may include a second substrate, a second mixture portion coated with an active material on one surface of the second substrate, a second uncoated portion disposed on the one surface of the second substrate where the second substrate is exposed, and a second insulating layer disposed on the second uncoated portion. A second electrode tab may extend outward from the second uncoated portion where the second substrate is exposed from among the second substrate, and the second electrode tab may be electrically connected to the case 20.

The first electrode 11 may function as a negative electrode. In this case, the first substrate may be formed of, for example, a copper foil or a nickel foil, and the first mixture portion, which is coated with the active material on one surface of the first substrate, may include, for example, graphite or carbon. The second electrode 13 may function as a positive electrode. In this case, the second substrate may be formed of, for example, a metal foil such as aluminum or an aluminum alloy, and the second mixture portion, which is coated with the active material on one surface of the second substrate, may include, for example, a transition-metal oxide. In addition, an end of the first mixture portion may protrude beyond an end of the second mixture portion.

The separator 12 may be interposed between the first electrode 11 and the second electrode 13. The separator 12 may function to allow movement of lithium ions and prevent a short circuit between the first electrode 11 and the second electrode 13. The separator may be formed of, for example, a polyethylene film, a polypropylene film, or a polyethylene-polypropylene film, but may vary. In an embodiment, an end of the separator 12 may protrude beyond an end of the first insulating layer 11_1.

The recessed space 23 that can be filled with the electrolyte may be present in the case 20. The electrolyte may be injected through an electrolyte injection port present on one side surface of the case 20. As a result, the electrode assembly 10, the first electrode 11, and the second electrode 13 may be impregnated with the electrolyte. According to an embodiment, a difference between a thickness of an edge portion of the first electrode 11 and a thickness of a central portion of the first electrode 11 during rolling may be equal to or less than a predetermined threshold difference. Therefore, an effect of preventing side reactions due to pooling of the electrolyte may be expected.

The electrode assembly 10 may be accommodated in the case 20 so that the first electrode 11, the second electrode 13, and the separator 12 are wound or stacked alternately. Further, one or more electrode assemblies may be stacked so that long-side surfaces thereof are adjacent to each other and may be housed in the case, and the number of electrode assemblies may vary.

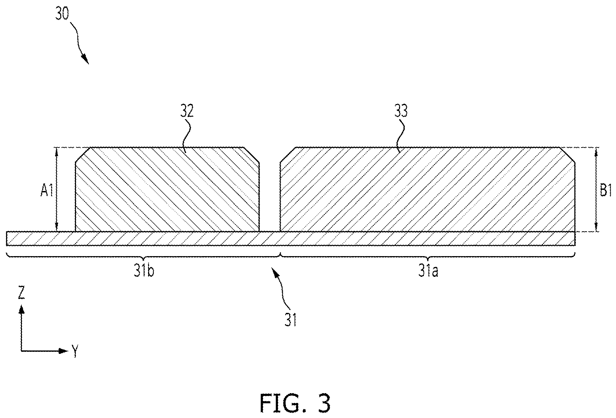

FIG. 3 is a view illustrating an example of the first electrode according to an embodiment of the present disclosure.

Referring to FIG. 3, a first electrode 30 may function as a negative electrode. The first electrode 30 may include a first substrate 31, a first mixture portion 33 coated with an active material on one surface of the first substrate 31 to define a coated portion 31a of the substrate 31, a first uncoated portion 31b where the first substrate 31 is exposed, and a first insulating layer 32 disposed on the first uncoated portion. In addition, the first insulating layer 32 may be coated on the one surface of the first substrate 31 so that a thickness A1, in the second direction (Z direction), of the first insulating layer 32 is in a range of 95 % to 105 % of a thickness B1, in the second direction (Z direction), of the first mixture portion 33. As a result, a difference between a thickness of an edge portion of the first electrode 30 and a thickness of a central portion of the first electrode 30 during rolling may be equal to or less than a predetermined threshold difference, so a reduction in thickness of the edge portion of the first mixture portion 33 may be prevented. At a lower left of FIG. 3, the first direction (Y direction) and a second direction (Z direction), which are imaginary directions for ease of understanding, are shown.

According to FIG. 3, ends and corners of the first insulating layer 32 and the first mixture portion 33 are depicted as being angular or oblique. However, this is only a schematic illustration, and, for example, the ends and corners may be disposed obliquely at a certain angle in the second direction (Z direction).

According to FIG. 3, the first insulating layer 32 and the first mixture portion 33 are illustrated as being spaced apart from each other by a separation distance. However, this is only an example and may vary. For example, one end of the first insulating layer 32 may be disposed to contact one end of the first mixture portion 33, or the first insulating layer 32 may be disposed so as to cover a part of the first mixture portion 33.

In an embodiment, the first insulating layer 32 may be coated on the one surface of the first substrate 31 after coating of the first mixture portion 33. However, the first insulating layer 32 may be coated after the coating of the first mixture portion 33.

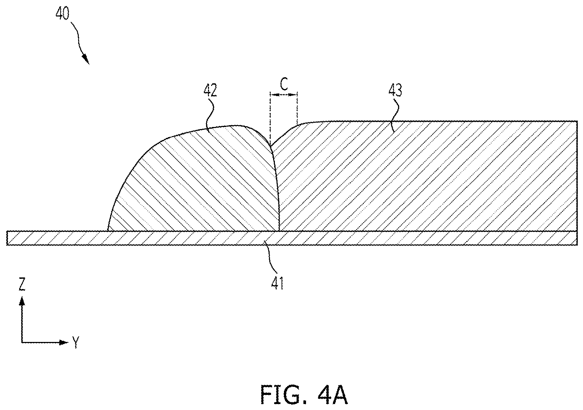

FIG. 4A is a view illustrating an example of a first electrode 40 according to an embodiment of the present disclosure, shown as a vertical cross-sectional view together with a width C in a reverse direction (e.g., -Y direction) of the first direction (Y direction) of a region where the first mixture portion 43 slides. Specifically, FIG. 4A schematically illustrates a cross-section of a state in which the first mixture portion 43, which is coated with the active material only on one surface of a first substrate 41 of the first electrode 40 functioning as a negative electrode, and a first insulating layer 42 disposed on a first uncoated portion are coated. At a lower left of FIG. 4A, the first direction (Y direction) and a second direction (Z direction) intersecting the first direction, which are imaginary directions for ease of understanding, are shown. The width C, in the reverse direction of the first direction (Y direction), of the region where the end of the first mixture portion 43 slides may be a line virtually defined on the drawing for ease of understanding. In addition, according to FIG. 4A, the width C, in the reverse direction of the first direction (Y direction), of the region where the end of the first mixture portion 43 slides may illustrate a width from a portion where the first mixture portion 43 begins to incline obliquely to a portion where the first mixture portion 43 contacts the first insulating layer 42. In FIG. 4A, description is made with focus on the width C.

In an embodiment, at a boundary region between an end of the first mixture portion 43 and the first insulating layer 42, one end of the first insulating layer 42 may be disposed to contact one end of the first mixture portion 43. Accordingly, the length of the width C, in the reverse direction of the first direction (Y direction), of the region where the end of the first mixture portion 43 slides may be reduced by the first insulating layer 42. As a result, a difference between a thickness of an edge portion of the first electrode 40 and a thickness of a central portion of the first electrode 40 during rolling may be equal to or less than the predetermined threshold difference. Therefore, suppression of a reduction in thickness of the edge portion of the first mixture portion 43 and prevention of side reactions caused by pooling of the electrolyte may be achieved.

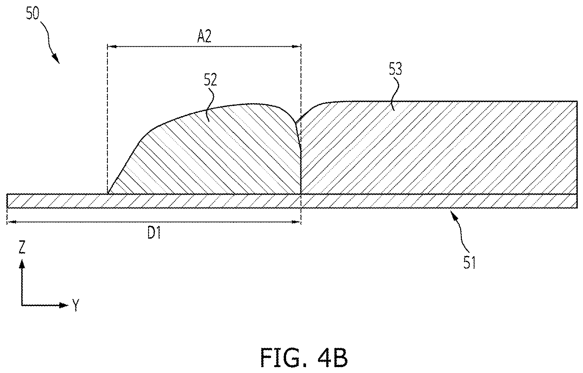

FIG. 4B is a view illustrating an example of a first electrode 50 according to an embodiment of the present disclosure, shown together with a width A2, in the first direction (Y direction), of a first insulating layer 52 and a width D1, in the first direction (Y direction), of a first uncoated portion. Specifically, FIG. 4B schematically illustrates a cross-section of a state in which the first mixture portion 53, which is coated with the active material only on one surface of a first substrate 51 of the first electrode 50 functioning as a negative electrode, and the first insulating layer 52 disposed on the first uncoated portion are coated. At a lower left of FIG. 4B, the first direction (Y direction) and a second direction (Z direction) intersecting the first direction, which are imaginary directions for ease of understanding, are shown. The widths A2 and D1 may be lines virtually defined on the drawing for ease of understanding. According to FIG. 4B, the width A2 of the first insulating layer 52 in the first direction (Y direction) may illustrate a width from a portion of the first insulating layer 52 that is most protruded to a portion where the first insulating layer 52 contacts the first mixture portion 53, and the width D1 of the first uncoated portion in the first direction (Y direction) may illustrate a width from a portion of the first substrate 51 that is most protruded in the reverse direction of the first direction (Y direction) to a portion where the first insulating layer 52 contacts the first mixture portion 53. FIG. 4B focuses on the widths A2 and D1.

In an embodiment, at a boundary region between an end of the first mixture portion 53 and the first insulating layer 52, one end of the first insulating layer 52 may be disposed to contact (e.g., directly contact) one end of the first mixture portion 53. The width A2 of the first insulating layer 52 in the first direction (Y direction) may be in a range of 10 % to 75 % of the width D1 of the first uncoated portion in the first direction (Y direction). For example, when D1 is 10 mm, A2 may be 3 mm. As a result, a reduction in thickness of an edge portion of the first mixture portion 53 may be prevented. In addition, in the above-described example, when A2 has a width of 7.5 mm or less, interference with welding performed to use the first substrate 51 as a current collector (an element configured to allow electrons to move during charging and discharging of the secondary battery) may be prevented, so an increase in resistance may be prevented.

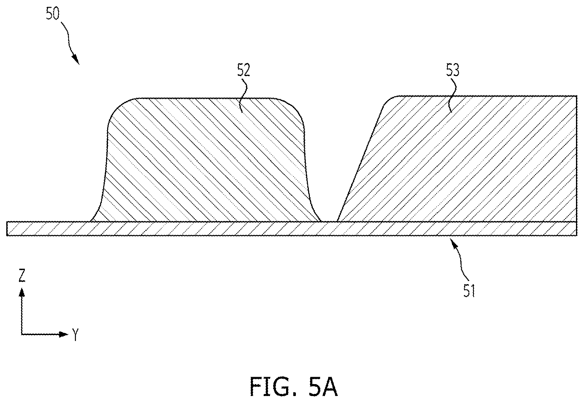

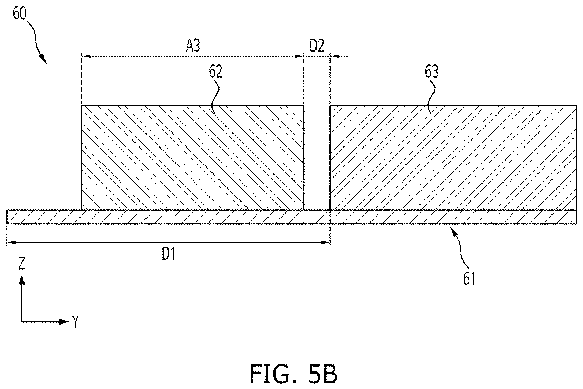

FIGS. 5A and 5B are views illustrating examples of first electrodes 50 and 60 in which a first insulating layer and a first mixture portion are disposed at a predetermined separation distance according to an embodiment of the present disclosure.

Referring to FIGS. 5A and 5B, each of the first electrodes 50 and 60, which functions as a negative electrode, may include a first substrate 51 or 61, a first mixture portion 53 or 63 coated with an active material on one surface of the first substrate, a first uncoated portion where the first substrate is exposed, and a first insulating layer 52 or 62 disposed on the first uncoated portion. In addition, the first insulating layer 52 or 62 and the first mixture portion 53 or 63 may be disposed to be spaced apart from each other by the predetermined separation distance.

According to FIG. 5B, a width D2, in the first direction (Y direction), in which the first insulating layer 62 and the first mixture portion 63 are disposed to be spaced apart from each other by the predetermined separation distance, the width D1, in the first direction (Y direction), of the first uncoated portion, and the width A3, in the first direction (Y direction), of the first insulating layer 62 may be lines virtually defined on the drawing for ease of understanding. At a lower left of FIG. 5B, the first direction (Y direction) and a second direction (Z direction) intersecting the first direction, which are imaginary directions for ease of understanding, are shown.

In addition, the width D2, in the first direction (Y direction), in which the first insulating layer 62 and the first mixture portion 63 are disposed to be spaced apart from each other by the predetermined separation distance, may illustrate a width from a portion of the first insulating layer 62 that is most protruded in the first direction (Y direction) to a portion of the first mixture portion 63 that is most protruded in the reverse direction of the first direction (Y direction). The width D1, in the first direction (Y direction), of the first uncoated portion may illustrate a width from a portion of the first substrate 61 that is most protruded in the reverse direction of the first direction (Y direction) to a portion of the first mixture portion 63 that is most protruded in the reverse direction of the first direction (Y direction). The width A3, in the first direction (Y direction), of the first insulating layer 62 may illustrate a width from a portion of the first insulating layer 62 that is most protruded in the reverse direction of the first direction (Y direction) to a portion of the first insulating layer 62 that is most protruded in the first direction (Y direction).

In an embodiment, the sum of the width D2, which is determined by the predetermined distance at which the first insulating layer 62 and the first mixture portion 63 are spaced apart in the first direction (Y direction), and the width A3 of the first insulating layer 62 in the first direction (Y direction) may be equal to or less than (e.g., less than or equal to) 75% of the width D1 of the first uncoated portion in the first direction (Y direction). Accordingly, a short circuit caused by contact between the first electrode 60 and a second electrode due to exposure of the first insulating layer 62 may be prevented.

In an embodiment, the width D2 in which the first insulating layer 62 and the first mixture portion 63 are disposed to be spaced apart from each other in the first direction (Y direction) may be predetermined to be in a range of 1 mm or less. Accordingly, even if the electrolyte is impregnated into the electrode assembly after injection of the electrolyte, pooling of the electrolyte at an end of the first electrode 60 may be prevented, so side reactions may be prevented.

According to FIG. 5B, ends of the first insulating layer 62 and the first mixture portion 63 are depicted as being angular. However, this is merely schematic, and, as illustrated in FIG. 5A, the ends of the first insulating layer 62 and the first mixture portion 63 may have oblique ends.

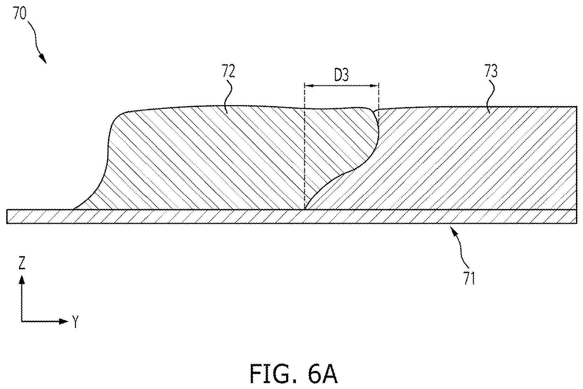

FIG. 6A is a view illustrating a state in which a first insulating layer 72 of a first electrode 70 according to an embodiment of the present disclosure is disposed so as to cover a part of a first mixture portion 73. According to FIG. 6A, the first electrode 70, which functions as a negative electrode, may include a first substrate 71, the first mixture portion 73 coated with the active material on one surface of the first substrate 71, a first uncoated portion where the first substrate 71 is exposed, and the first insulating layer 72 disposed on the first uncoated portion. At a lower left of FIG. 6A, the first direction (Y direction) and a second direction (Z direction) intersecting the first direction, which are imaginary directions for ease of understanding, are shown. Here, the first electrode 70 may be the negative electrode.

In an embodiment, the first insulating layer 72 may be disposed so as to cover a part of the first mixture portion 73. As illustrated, the first insulating layer 72 may be configured to cover an upper part of the first mixture portion 73. A width D3, in the first direction (Y direction), of a region where the first insulating layer 72 covers the part of the first mixture portion 73 may be a line virtually defined on the drawing for ease of understanding.

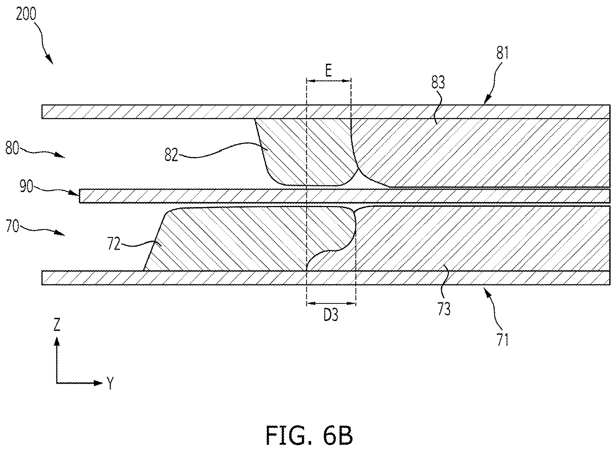

FIG. 6B is a vertical cross-sectional view illustrating an example of an electrode assembly 200 according to an embodiment of the present disclosure together with the first electrode 70, a separator 90, and a second electrode 80.

Referring to FIG. 6B, the electrode assembly 200 may include the first electrode 70, which includes the first substrate 71, the first mixture portion 73 coated with the active material on one surface of the first substrate 71, the first uncoated portion where the first substrate 71 is exposed, and the first insulating layer 72 disposed on the first uncoated portion; the second electrode 80, which includes a second substrate 81, a second mixture portion 83 coated with the active material on one surface of the second substrate 81, a second uncoated portion where the second substrate 81 is exposed, and a second insulating layer 82 disposed on the second uncoated portion; and the separator 90 interposed between the first electrode 70 and the second electrode 80. The electrode assembly 200 may include a structure in which the first electrode 70, the separator 90, and the second electrode 80 are repeatedly stacked in the second direction (Z direction). However, the vertical cross-sectional view of the electrode assembly illustrated in FIG. 6B is merely an embodiment, and the thickness of the electrode assembly, or the number of electrodes and separators may vary. The first electrode 70 may correspond to the first electrode 70 of FIG. 6A. In an embodiment, an end of the first mixture portion 73 may protrude, in the reverse direction of the first direction (Y direction), beyond an end of the second mixture portion 83. At a lower left of FIG. 6B, the first direction (Y direction) and a second direction (Z direction) intersecting the first direction, which are imaginary directions for ease of understanding, are shown.

The first electrode 70 may function as a negative electrode. In an embodiment, the first mixture portion 73 may be disposed on the one surface of the first substrate 71, and the first insulating layer 72 may be disposed on the first uncoated portion where the first substrate 71 is exposed. However, this is only an embodiment and the first insulating layer 72 and the first mixture portion 73 may be disposed on both surfaces of the first substrate 71. In addition, the separator 90 and the second electrode 80 may be disposed on an upper side or a lower side, in the second direction (Z direction), of the first electrode 70.

The second electrode 80 may function as a positive electrode. In an embodiment, the second mixture portion 83 may be disposed on the one surface of the second substrate 81, and the second insulating layer 82 may be disposed on the second uncoated portion where the second substrate 81 is exposed. In addition, the second insulating layer 82 may prevent a short circuit caused by contact between the first mixture portion 73 and the second mixture portion 83 when the separator 90 shrinks. However, this is only an embodiment and the second insulating layer 82 and the second mixture portion 83 may be disposed on both surfaces of the second substrate 81. In addition, the separator 90 and the first electrode 70 may be disposed on an upper side or a lower side, in the second direction (Z direction), of the second electrode 80.

The separator 90 may be interposed between the first electrode 70 and the second electrode 80 and may function to allow movement of lithium ions while preventing a short circuit between the first electrode 70 and the second electrode 80. In an embodiment, an end of the separator 90 may protrude, in the reverse direction of the first direction (Y direction), beyond an end of the first insulating layer 72. Accordingly, contact between the first electrode 70 and the second electrode 80 may be prevented and a short circuit may be prevented.

In an embodiment, a thickness of the first insulating layer 72 in the second direction (Z direction) may be coated on the one surface of the first substrate 71 so as to be in a range of 95 % to 105 % of a thickness of the first mixture portion 73 in the second direction (Z direction). As a result, a difference between a thickness of an edge portion of the first electrode 70 and a thickness of a central portion of the first electrode 70 during rolling may be equal to or less than the predetermined threshold difference, so suppression of a reduction in thickness of the edge portion of the first electrode 70 mixture portion and prevention of pooling of the electrolyte after injection of the electrolyte may be achieved.

In an embodiment, the first insulating layer 72 may be disposed so as to cover a part of the first mixture portion 73. In addition, the separator 90 and the second electrode 80 may be disposed on an upper portion of a region where the first insulating layer 72 covers the first mixture portion 73. As a result, contact between the first mixture portion 73 and the second mixture portion 83 may be prevented even when the separator 90 shrinks.

Referring to FIG. 6B, a width D3, in the first direction (Y direction), of a region where the first insulating layer 72 covers a part of the first mixture portion 73 and a width E between a portion that is most protruded, in the reverse direction of the first direction (Y direction), of the first mixture portion 73 and a portion that is most protruded, in the reverse direction of the first direction (Y direction), of the second mixture portion 83 may be lines virtually defined on the drawing for ease of understanding. In an embodiment, the width D3 and the width E may be identical to each other. Accordingly, even when the separator 90 shrinks, a short circuit caused by contact between electrodes may be prevented.

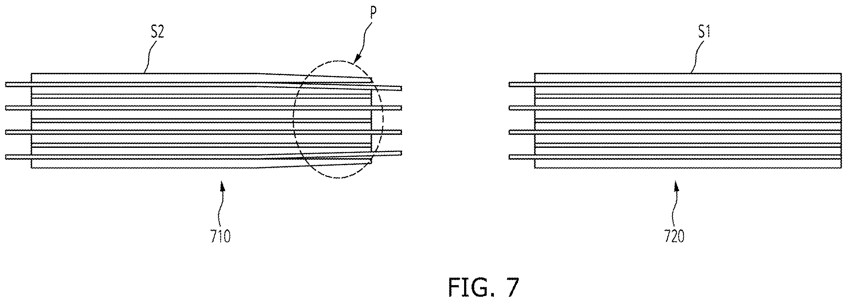

FIG. 7 is a view comparing differences depending on the presence or absence of a sliding region at an electrode edge portion between the prior art and an embodiment of the present disclosure.

FIG. 7 schematically illustrates a comparative example of electrode assembly 710 and an electrode assembly 720, each including a first electrode S1 or S2, respectively, that may function as a negative electrode, a separator, and a second electrode that may function as a positive electrode. In an embodiment, the electrode assembly 720 may be substantially identical to the electrode assembly 10 of FIG. 2. Although the first electrode tab 14 and the first insulating layer 11_1 of FIG. 2 are omitted from the first electrode S1 of the electrode assembly 720 of FIG. 7, this is only a schematic representation for ease of comparison, and the first electrode S1 may include the first electrode tab and the first insulating layer according to various embodiments. In addition, the first electrode S2 included in the electrode assembly 710 according to the comparative example may not include an insulating layer. Accordingly, a thickness of a central portion of a first mixture portion included in the electrode assembly 710 and a thickness of an edge portion thereof may differ from each other during rolling. Therefore, a sliding region P may occur at an edge portion of the first electrode S2.

According to various embodiments of the present disclosure, in the first electrode S1 of the electrode assembly 720, because a difference between a thickness of an edge portion of the first electrode S1 and a thickness of a central portion of the first electrode S1 during rolling may be equal to or less than the predetermined threshold difference due to the first insulating layer, side reactions caused by pooling of the electrolyte may be prevented. Compared with the sliding region P of the edge portion of the first electrode S2 of the electrode assembly 710, even if the electrolyte is impregnated into the electrode assembly after injection of the electrolyte, pooling of the electrolyte at the edge portion of the first electrode may be prevented, so side reactions may be prevented. For example, side effects such as cell cycle fading caused by occurrence of side reactions may be prevented.

The electrode assembly 710 and the electrode assembly 720 are merely an embodiment for comparison, and shapes, forms, numbers, and lengths of the electrode assemblies, first electrodes, separators, and second electrodes of the present disclosure may vary. Various embodiments may differ, and, for example, although the electrode assembly may have a structure in which electrodes and separators are stacked as illustrated, the electrode assembly may instead have a wound structure.

In a stack electrode plate of a pouch-type battery in which positive electrodes and negative electrodes are alternately laminated to fabricate a cell, sliding may occur at an end of a negative electrode plate. Consequently, a thickness of the end of the negative electrode plate and a thickness of a mixture portion of the negative electrode plate may differ from each other.

In order to facilitate movement of lithium ions, an electrolyte may be injected into the secondary battery. In addition to the impregnated electrolyte, surplus electrolyte that is additionally required, that is, a free electrolyte, may also be injected. However, when sliding occurs in the negative electrode plate, a thickness of an edge portion of the negative electrode plate may become thin, so the electrolyte may pool in that portion. Accordingly, during battery cycling, a side reaction may occur due to the pooled electrolyte. Furthermore, side effects such as cell cycle fading may occur.

According to various embodiments of the present disclosure, although the insulating layer is disposed in the boundary region of an end of the mixture portion and one end of the insulating layer is disposed to contact one end of the mixture portion, because a width of the insulating layer may be in a range of 10 % to 75 % of a width of an uncoated portion where the substrate is exposed, a reduction in thickness of the edge portion of the electrode mixture portion may be prevented and an increase in resistance due to interference with welding, which is performed to use the substrate as a current collector (an element configured to allow electrons to move during charging and discharging), may be prevented.

According to various embodiments of the present disclosure, although the insulating layer is disposed at a predetermined separation distance from the mixture portion, a sum of the separation distance and a width of the insulating layer may be equal to or less than 75 % of a width of the substrate, so a short circuit caused by contact between electrodes may be prevented.

According to various embodiments of the present disclosure, although the insulating layer is disposed so as to cover a part of a first mixture portion, because a width, in a first direction, of a region in which the insulating layer covers the part of the first mixture portion is identical to a width between a portion that is most protruded in a reverse direction of the first direction of the first mixture portion and a portion that is most protruded in the reverse direction of the first direction of a second mixture portion, a short circuit caused by contact between electrodes may be prevented even when a separator shrinks.

Although the present disclosure has been described with reference to embodiments and drawings illustrating aspects thereof, the present disclosure is not limited thereto.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated.

## Claims

**1.** An electrode assembly (200), comprising:
a first electrode (70) including a first substrate (71), a first mixture portion (73) including an active material and coated on one surface of the first substrate (71), a first uncoated portion (31b) on the one surface of the first substrate (71), the first uncoated portion (31b) of the first substrate (71) being exposed, and a first insulating layer (72) on the first uncoated portion (3 1 b);
a second electrode (80) including a second substrate (81), a second mixture portion (83) including an active material and coated on one surface of the second substrate (81), a second uncoated portion on the one surface of the second substrate (81), the second uncoated portion of the second substrate (81) being exposed, and a second insulating layer (82) on the second uncoated portion; and
a separator (90) between the first electrode (70) and the second electrode (80).

**2.** The electrode assembly (200) as claimed in claim 1, wherein an end of the first mixture portion (73) protrudes beyond an end of the second mixture portion (83).

**3.** The electrode assembly (200) as claimed in claim 1 or 2, wherein the first insulating layer (72) is coated on the one surface of the first substrate (71), the first insulating layer (72) having a thickness (A1) in a range of 95 % to 105 % of a thickness (B1) of the first mixture portion (73).

**4.** The electrode assembly (200) as claimed in any one of the preceding claims, wherein an end of the separator (90) protrudes beyond an end of the first insulating layer (72).

**5.** The electrode assembly (200) as claimed in any one of the preceding claims, wherein one end of the first insulating layer (72) contacts one end of the first mixture portion (73).

**6.** The electrode assembly (200) as claimed in claim 5, wherein a width (A2) of the first insulating layer (72) is in a range of 10 % to 75 % of a width of the first uncoated portion (31b).

**7.** The electrode assembly (200) as claimed in any one of the preceding claims, wherein the first insulating layer (72) and the first mixture portion (73) are spaced apart from each other by a predetermined separation distance (D2).

**8.** The electrode assembly (200) as claimed in claim 7, wherein a sum of the predetermined separation distance (D2) and a width (A3) of the first insulating layer (72) is equal to or less than 75 % of a width (D1) of the first uncoated portion (31b).

**7.** The electrode assembly (200) as claimed in any one of the preceding claims, wherein the first insulating layer (72) covers a part of the first mixture portion (73).

**10.** The electrode assembly (200) as claimed in claim 9, wherein a width (D3), in a first direction (Y direction), of a region where the first insulating layer (72) covers a part of the first mixture portion (73) is identical to a width (E) between a portion where the first mixture portion (73) is most protruded in a reverse direction of the first direction and a portion where the second mixture portion (83) is most protruded in the reverse direction of the first direction.

**11.** The electrode assembly (200) as claimed in claim 9 or 10, wherein the separator (90) and the second electrode (80) are on an upper portion of a region where the first insulating layer (72) covers the first mixture portion (73).

**12.** A secondary battery (100), comprising:
an electrode assembly (200) as claimed in any one of claims 1 to 11;
a case (20) that houses the electrode assembly (200); and
an electrolyte in the case (20).

**13.** The secondary battery (100) as claimed in claim 12, wherein a difference between a thickness of an edge portion of the first electrode (70) and a thickness of a central portion of the first electrode (70) is equal to or less than a predetermined threshold difference.

**14.** The secondary battery (100) as claimed in claim 12 or 13, wherein the case (20) is a pouch-type case including an upper case (21) and a lower case (22).

**15.** The secondary battery (100) as claimed in any one of the claims 12 to 14, wherein the electrode assembly (10) is of a wound type.
